# EUROPEAN PATENT APPLICATION

(11) **EP 4 768 314 A1**
(43) Date of publication of application: **01.07.2026**
(21) Application number: 24223567.9
(22) Date of filing: 27.12.2024
(51) Int. Cl.: B60L 53/12, B60L 53/38, H02J 50/10, H02J 50/90, G01R 33/00, G06F 3/05, H03H 17/02

(54) **DETERMINING POSITION DURING WIRELESS POWER TRANSFER ON SATURATED SIGNAL**

(71) Applicant: WiTricity AI Tech, LLC, Stuart, FL 34997 (US)
(72) Inventor: MARKMANN, Sergej, Midway, 31320 (US)
(74) Representative: HG Law International LLP

(57) **Abstract**

A method for localizing a vehicle assembly with respect to a ground assembly in a wireless power transfer system is disclosed. The method includes receiving a combined signal comprising (a) a wireless power transfer (WPT) signal and (b) a differential inductive positioning system (DIPS) signal; determining a sampling frequency for the combined signal; determining a sampling phase for the combined signal; extracting the DIPS signal from the combined signal based on the sampling frequency and the sampling phase; and determining the vehicle assembly position relative to the ground assembly based on the extracted DIPS signal.

## Description

### Field of the Invention

The technical field relates generally to wireless power transfer, and more specifically to devices, systems, and methods related to determining the position of a vehicle assembly with respect to a ground assembly during wireless power transfer.

### Background

Wireless power transfer (WPT) for charging electric vehicles is described in detail in patents such as U.S. Patents 8,933,594, titled "Wireless energy transfer for vehicles," and 9,561,730, titled "Wireless power transmission in electric vehicles," which are incorporated here by reference in their entirety. More specifically, these patents refer to inductive WPT between a ground-based unit of a wireless charging station and a vehicle-based unit, herein also simply referred to as the ground unit or ground assembly and the vehicle unit or vehicle assembly, respectively.

Efficient and regulatory compliant WPT for electric vehicles requires a WPT coil in the vehicle unit to be aligned with a WPT coil in the ground unit within a specified tolerance zone. Some standards specify a tolerance zone of +/- 75 mm in x-direction (vehicle longitudinal axis) and +/- 100 mm in y-direction (vehicle lateral axis). Therefore, one aspect of WPT for charging electric vehicles to be addressed is assisting a user or an autonomous driving system to park and align the vehicle within the relatively tight tolerance zone sometimes also referred to as "charging spot". Such park assist system may also include guidance of the user or the autonomous driving system in steering the vehicle towards the ground unit.

A further aspect of WPT for electric vehicle charging to be addressed is establishing wireless communications between the vehicle and the wireless charging station from which the vehicle is attempting to charge. Standard compliant WPT for electric vehicles, requires the wireless charging station to communicate with the vehicle via a wireless communication network for purposes of WPT system control and other WPT-related functions (e.g., for the safety of the system). This communication is based on WiFi IEEE 802.11x using standardized protocols enabling interoperability. Establishing wireless communications may be particularly difficult in a parking facility with multiple wireless charging stations at which multiple EVs may be attempting to park at the same time. It is necessary to disambiguate the connections - that is, make sure that each vehicle is in communication with the wireless charging station it is attempting to use for charging, and not another e.g., neighboring station. This disambiguation is part of a process referred to as pairing and shall ensure that a wireless communication node (e.g., a WiFi client) associated to the vehicle communicates with a wireless communication node (e.g., a WiFi access point) associated to the right wireless charging station.

### Summary

A WPT system may utilize inductive power transfer to transfer power between WPT units of the WPT system, such as between respective WPT units of a ground assembly and a vehicle assembly of a WPT system for charging EVs. For example, a WPT unit may be configured to transmit electrical power to another WPT unit, or receive from another WPT unit, power via the establishment of an electromagnetic near field, that is perceived by a receiving WPT unit positioned within a region near to the transmitting WPT unit. In some cases, such as grid to vehicle (G2V) charging, power is initially provided by a primary power source, for example, an electrical grid, to the transmitting WPT unit (e.g., a ground WPT unit), which in turn inductively transfers it to the receiving WPT unit (e.g., a vehicle WPT unit) to store it in a secondary source, for example, a power storage such as a battery of a vehicle. Similar principles apply for vehicle to everything (V2X) energy transfer. Irrespective of the direction of the energy transfer, the induction coils of the WPT units will typically be positioned close to each other and substantially aligned to achieve a strong degree of electromagnetic coupling and thus efficient energy transfer.

One problem that arises in this context is the alignment of one device to another, to enable efficient transfer of power. This alignment may be performed by using a differential inductive positioning system (DIPS) comprising two or more coils. These coils may operate to enable the system to determine the vertical, horizontal, and rotational positioning of one device to the other (e.g., of the VA to the GA). However, the position monitoring using the DIPS coils may be difficult under some circumstances, such as when the primary power transfer coil (WPT coil) is operating and the VA is charging.

Since the WPT system frequency operation is possible between 85kHz-90kHz and the DIPS signals for the horizontal field coils are specified between 111.5 kHz-117.5 kHz and the vertical field coils are in the range of 142 kHz-146 kHz, it is technically challenging to suppress the WPT signal without influencing the DIPS signals and extract the positioning information. Moreover, since a modulation is present on the horizontal field coils the effective spectral separation is between 90 kHz and 109.5 kHz (at least 2 kHz bandwidth of amplitude modulated signal) which makes it technically difficult to suppress the WPT with a notch- or the bandpass-filter if one considers the tolerance of the filter elements and the temperature range of operation.

In one approach, the system simply shuts off the primary WPT coil to perform positioning determinations. However, this process interrupts power transfer, and thus results in a less optimal power transfer.

Another approach may use an inertial measurement unit (IMU) to perform positioning measurement adjustments during charging. However, the IMU may drift over time, as well as drift based on temperature fluctuations, meaning that the positioning determination degrades over time.

Still other approaches may use separate devices or systems to perform positioning. However, these separate systems or devices add complexity and cost, and may not operate in all conditions. There exists a need for a process to perform positioning determinations while charging, using the existing DIPS framework.

An example method of the present disclosure is described below. The method is for localizing a vehicle assembly with respect to a ground assembly in a wireless power transfer system. The method includes receiving a combined signal comprising (a) a wireless power transfer (WPT) signal and (b) a differential inductive positioning system (DIPS) signal. The method also includes determining a sampling frequency for the combined signal, and determining a sampling phase for the combined signal. The method further includes extracting the DIPS signal from the combined signal based on the sampling frequency and the sampling phase, and determining the vehicle assembly position relative to the ground assembly based on the extracted DIPS signal.

In some embodiments, the combined signal comprising the WPT signal and the DIPS signal has an amplitude which is larger than or equal to a saturation voltage of a vehicle assembly receiver of the vehicle assembly. That is, the combined signal has an amplitude that is larger than or equal to a saturation voltage of the VA receiver into which the combined signal is received. In one example, the WPT signal component of the combined WPT and DIPS signal has an amplitude that is at least ten times greater than the amplitude of the DIPS signal. The WPT signal frequency may be, for example, in the range of 85-90kHz.

In some embodiments, determining the sampling frequency comprises setting the sampling frequency to the WPT signal frequency. This enables the system to sample the combined signal at the zero crossing of the WPT signal, effectively enabling the system to subtract the WPT signal from the combined signal.

In some embodiments, the combined signal is passed through an analog front end circuit. The analog front end circuit may include a protection circuit to limit the amplitude of the combined input signal, and a filtering and amplification circuit. The resulting signal output by the analog front end circuit may then be passed to an analog to digital converter (ADC) that uses the determined sampling frequency and sampling phase to extract the DIPS signal. In some embodiments, the ADC has an adjustable sampling frequency and an adjustable phase, wherein the adjustable sampling frequency is set to the determined sampling frequency for the combined signal, and the adjustable phase is set to the determined sampling phase for the combined signal.

In some embodiments, determining the sampling phase comprises: detecting a first DIPS signal from the combined signal using a first candidate sampling phase; determining an amplitude offset for the detected first DIPS signal; determining a modified candidate sampling phase based on the amplitude offset, such that the modified candidate sampling phase results in a detected second DIPS signal having a zero amplitude offset; and setting the sampling phase to be the modified candidate sampling phase. This process allows the system to update the sampling phase to remove any offset, thereby improving the overall performance of the system.

In some embodiments, extracting the DIPS signal further comprises: applying a fast Fourier transform (FFT) to the extracted DIPS signal to identify frequency components of extracted DIPS signal; and applying anti-aliasing to the identified frequency components of the extracted DIPS signal based on expected DIPS frequency components. The anti-aliasing may include performing mathematical computations to determine the expected aliased frequencies of the DIPS signal components, as well as their respective amplitudes, which may then be used for positioning determinations. For example, determining the vehicle assembly position relative to the ground assembly may be performed based on the respective amplitudes of the frequency components of the extracted DIPS signal.

In another embodiment, a system for localization or positioning within a wireless power transfer system is described. The system includes a ground assembly configured to transmit a combined signal comprising (a) a wireless power transfer (WPT) signal and (b) a differential inductive positioning system (DIPS) signal. The system also includes a vehicle assembly configured to: receive the combined signal from the ground assembly; determine a sampling frequency for the combined signal; determine a sampling phase for the combined signal; extract the DIPS signal from the combined signal based on the sampling frequency and the sampling phase; and determine the vehicle assembly position relative to the ground assembly based on the extracted DIPS signal.

In another embodiment, a system for localization or positioning within a wireless power transfer system is described. The system includes a vehicle assembly configured to transmit a combined signal comprising (a) a wireless power transfer (WPT) signal and (b) a differential inductive positioning system (DIPS) signal. The system also includes a ground assembly configured to: receive the combined signal from the ground assembly; determine a sampling frequency for the combined signal; determine a sampling phase for the combined signal; extract the DIPS signal from the combined signal based on the sampling frequency and the sampling phase; and determine the vehicle assembly position relative to the ground assembly based on the extracted DIPS signal.

In another embodiment, a vehicle assembly for use in a wireless power transfer system is described. The vehicle assembly includes control circuitry configured to: receive, from a ground assembly, a combined signal comprising (a) a wireless power transfer (WPT) signal and (b) a differential inductive positioning system (DIPS) signal; determine a sampling frequency for the combined signal; determine a sampling phase for the combined signal; extract the DIPS signal from the combined signal based on the sampling frequency and the sampling phase; and determine the vehicle assembly position relative to the ground assembly based on the extracted DIPS signal.

In another embodiment, a ground assembly for use in a wireless power transfer system is described. The ground assembly includes control circuitry configured to: receive, from a vehicle assembly, a combined signal comprising (a) a wireless power transfer (WPT) signal and (b) a differential inductive positioning system (DIPS) signal; determine a sampling frequency for the combined signal; determine a sampling phase for the combined signal; extract the DIPS signal from the combined signal based on the sampling frequency and the sampling phase; and determine the vehicle assembly position relative to the ground assembly based on the extracted DIPS signal.

### Brief Description of the Drawings

The above and other objects and advantages of the disclosure will be apparent upon consideration of the following detailed description, taken in conjunction with the accompanying drawings, in which:
FIG. 1 illustrates an example parking facility with multiple wireless charging stations for use by electric vehicles, in accordance with some examples of the disclosure;
FIG. 2 illustrates a hierarchical block diagram of an example wireless power transfer system for wireless electric vehicle charging, in accordance with some examples of the disclosure;
FIG. 3 illustrates an example analog front end circuit, a block diagram of the analog front end circuit, and an analog to digital converter, in accordance with some examples of the disclosure;
FIGS. 4A-B illustrate an example idealized signal for a combined WPT and DIPS signal (FIG. 4A), and for only the DIPS signal (FIG. 4B), in accordance with some examples of the disclosure;
FIGS. 5A-C illustrate a saturated signal output by the analog front end of FIG. 3, for a combined WPT and DIPS signal (FIG. 5A), an expected frequency spectrum of the combined signal of FIG. 5A if there was no saturation (FIG. 5B), and the actual frequency spectrum of the combined signal of FIG. 5A due to saturation (FIG. 5C), in accordance with some examples of the disclosure;
FIGS. 6A-D illustrate example charts of the saturated combined WPT and DIPS signal, as well as the sampled DIPS signal at four different sampling phases, in accordance with some examples of the disclosure;
FIGS. 7A-D illustrate the saturated combined WPT and DIPS signal sampled at three different sampling phases (FIGS. 7A-C), as well as the extracted offset of the sampled DIPS signal for various phase shifts of the sampling phase with respect to the WPT signal phase (FIG. 7D), in accordance with some examples of the disclosure;
FIGS. 8A-C illustrate the saturated combined WPT and DIPS signal, as well as the sampled DIPS signal at a correct sampling frequency and phase (FIG. 8A), as well as the frequency spectrum of the sampled DIPS signal (FIGS. 8B-C), in accordance with some examples of the disclosure;
FIG. 9 illustrates the computed aliased frequencies and identification of the spectral components of the sampled DIPS signal, in accordance with some examples of the disclosure;
FIG. 10 illustrates examples of a saturated combined WPT and DIPS signal and corresponding DIPS signal sampled at two different sampling phase offsets, along with the corresponding frequency spectrums, in accordance with some examples of the disclosure;
FIGS. 11A-C illustrate examples of a saturated combined WPT and DIPS signal and corresponding DIPS signal sampled at two different sampling frequency offsets, in accordance with some examples of the disclosure;
FIG. 12 illustrates a flowchart of an example process of determining the position of a vehicle assembly with respect to a ground assembly using the sampling techniques disclosed herein, in accordance with some examples of the disclosure.

### Detailed Description

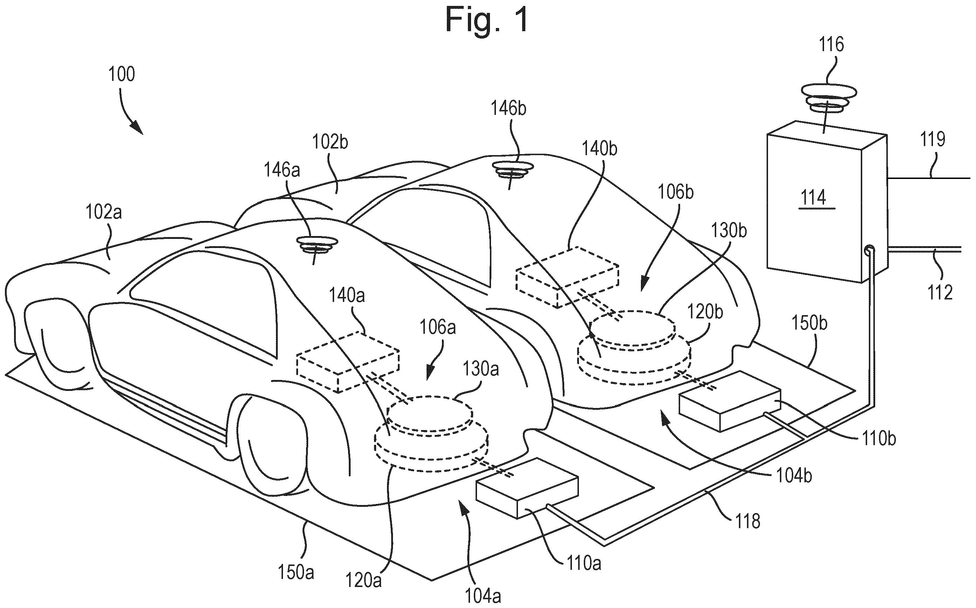

FIG. 1 illustrates an example of a parking facility 100 providing wireless charging services in parking spots 150a and 150b, including a plurality of WPT systems suitable for use in systems and methods of the present disclosure. Two wireless charging-enabled vehicles, 102a, 102b integrating WPT vehicle units 130a, 130b are each parked over a WPT ground unit, 120a, 120b. Both vehicle unit and ground unit include a WPT coil (not shown) sometimes also referred to as an induction coil configured to wirelessly transfer power based on the Faraday induction principle. Both vehicle unit and ground unit also include respective portions of a position detection system. In some implementations, the ground units are surface mounted on the floor. In other implementations, the ground units are flush mount with the floor or buried in the ground (e.g., in the asphalt). The power converters 110a, 110b convert power received by WPT vehicle units 130a, 130b to a form suitable for charging the vehicle's traction battery (not shown). In some examples and as described in U.S. Patent US 9,561,730 B2, the power converters 140a, 140b may be integrated with power converters used for plug-in charging of the vehicle, commonly called on-board chargers (OBC), or other on-board vehicle components. The WPT ground units 120a, 120b are shown linked to external power converters 110a, 110b, each connected to a power supply bus 118. In some implementations, the power converters 110a, 110b are configured and mounted as a "wall box." In other implementations, the power converters or parts thereof are integrated into the WPT ground units. The power supply bus 118 is in turn connected to a central power distribution unit 114. In some implementations and operations, the central power distribution unit 114 receives power from a power utility 112 sometimes referred to as "power grid" and provides DC power to the bus 118, and the power converters 110a, 110b are inverters, such as the multi-level inverter described in provisional U.S. Application 18/486,830, filed October 13, 2023, and incorporated here by reference. The power converters 110a, 110b, provide low-frequency (LF) power signals, such as the 85 kHz signals used for WPT according to the SAE J2954 standard, to the WPT ground units 120a, 120b, to turn into LF magnetic fields for WPT. In other examples, the power distribution unit 114 provides the LF signals directly to each WPT ground unit, and power converters 110a, 110b are simpler or not present. In yet other examples, the power distribution unit 114 and bus 118 are not present, and the power converters 110a, 110b are each connected directly to the power utility 112 and convert AC power from the utility to LF power for wireless power transfer. The combination of a WPT ground unit (e.g., 120a), a power converter (e.g., 110a), and any other ground-side electronics (not shown) constitutes a wireless charging station (e.g., 104a) as indicated in FIG. 1. In some cases, the WPT ground units 120a, 120b are also referred to as Ground Assembly Resonators (GAR) or ground assembly pads, and the wireless charging station is also referred to as a Ground Assembly (GA) or Electric Vehicle Supply Equipment (EVSE). Analogously, the WPT vehicle units 130a, 130b are sometimes referred to as Vehicle Assembly Resonators (VAR) or vehicle assembly pads and the combination of a WPT vehicle unit (e.g., 130a) and a power converter (e.g., 140a) and any other vehicle-side electronics (not shown) constitutes a Vehicle Assembly (VA) (e.g., 106a, 106b). Each of the power connections shown may be bi-directional, allowing the vehicles to discharge power from their batteries to the power utility 112 in a vehicle-to-grid (V2G), or other load in a vehicle-to-home (V2H), vehicle-to-vehicle (V2V) or similar arrangement (generally V2X).

FIG. 1 also illustrates vehicles 102a, 102b, and power distribution unit 114 providing wireless communication units 146a, 146b, and 116, respectively. The wireless communication unit 116 may be configured to wirelessly communicate with the vehicles 102a and 102b e.g., based on a Wi-Fi IEEE 802.11x standard. In SAE standard conformant wireless charging systems, this communication is used for exchanging data between the GA and VA for purposes of WPT control and safety. Further, the power distribution unit 114 provides an interface 119 configured to communicate with external entities (e.g., a charging operation center) via a communication backhaul (not shown). This backhaul may rely on radio communications (e.g., via communication unit 116), power line communications (e.g., via power utility 112), or any other line communications including fiber optical. In the example parking facility 100, wireless communication unit 116 is configured to serve multiple vehicles. In other parking facilities, each of the wireless charging stations 104a, 104b provide a wireless communication unit (not shown) configured to communicate with the respective vehicles 102a, 102b.

Beside the WPT coil, the WPT ground units 120a, 120b or the WPT vehicle units 130a, 130b, or both may include various sensors and detection systems (not shown). For example, they may include systems for detecting a positional relationship between the vehicle unit and the ground unit. The positional relationship is needed to guide the vehicle to the charging spot, to mutually align the vehicle-side and groundside WPT coils within the specified tolerance, and for pairing of a vehicle with a wireless charging station as needed to establish communication between the right entities in multiple vehicle multiple charging station scenarios. The ground unit may also include sensors and detection systems to determine presence of a foreign object that has the potential to heat up by induction heating or any hazardous events caused by an incandescent object on the surface of the ground unit. Further, it may include sensors and a detection system for determining presence of a living object e.g., a hand of a person or animals approaching a critical space beneath the vehicle where electromagnetic field exposure exceeds certain limits (e.g., based on IEEE or ICNIRP guidelines). Moreover, the ground unit may include sensors and a detection system for determining a presence of the vehicle or a type of the vehicle. In some implementations, sensors and detection systems or parts thereof may be external to the ground unit or vehicle unit. The systems and methods disclosed herein may improve the process of positioning the vehicle, e.g., vehicle 102a, 102b, relative to a charging spot. Additionally or alternatively, systems and methods disclosed herein may improve wireless communications between the vehicle and the wireless charging station from which the vehicle is attempting to charge.

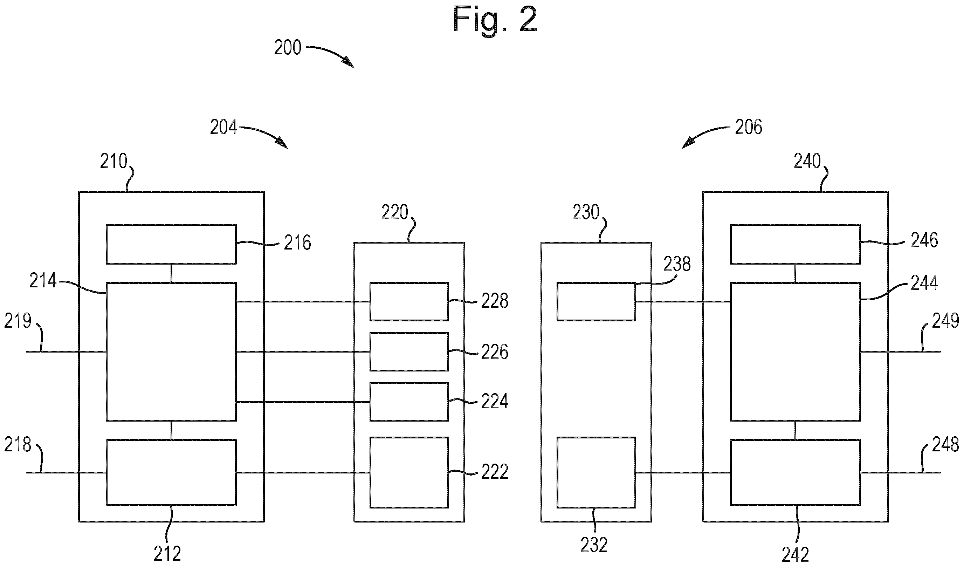

FIG. 2 is a hierarchical block diagram of an example WPT system 200 for wireless electric vehicle charging. At the top hierarchy level, the system 200 comprises a GA 204 and a VA 206 that may refer to the wireless charging station 104a and the VA 106a, respectively, of FIG. 1. The next lower level shows the GA 204 composed of a GA power conversion & control unit 210 and a WPT ground unit 220 (e.g., 120a of FIG. 1) and various connections between these blocks. Splitting the GA into two blocks implies implementations where the GA power conversion & control unit and the ground unit are physically separated (as illustrated in FIG. 1) and interconnected via a several meters long multiwire cable herein referred to as GA feeder cable (not shown). However, it should not exclude implementations where the GA power conversion & control unit is entirely or partially integrated in the ground unit forming one physical unit with a common housing (not shown).

At the third level, the GA power conversion & control unit includes a GA power converter 212 (e.g., 110a of FIG. 1), a GA controller 214, and a GA wireless communication unit 216. The ground unit 220 integrates a GA WPT coil 222 as well as various functions as needed for Foreign Object Detection (FOD), Living Object Detection (LOD), Vehicle Detection (VD), and Position Detection (PD) as previously discussed with reference to FIG. 1. In the example of FIG. 2, these functions are provided by a FOD unit 224, a LOD unit 226, and a GA PD unit 228, each configured and connected to the GA controller for exchanging data and control. In some implementations such as described in Patent US 11,914,094 and incorporated here by reference, these functions share or partially share one common hardware platform referred to as a multi-purpose detection system.

In an implementation conforming with the SAE standard, the GA wireless communication unit 216 is a WiFi Access Point providing an air interface to a Wireless Local Area Network (WLAN) of a parking facility. Certain parking facilities (e.g., parking facility 100 of FIG. 1) provide a central WiFi access point associated to multiple GAs. In such implementations, the GA wireless communication unit 216 is external to the GA 204. In another implementation, the GA wireless communication unit is integral part of the ground unit 220.

The GA WPT coil 222 may include a tuning & impedance matching network (not shown) forming a resonant circuit and the ground-unit is referred to as the GAR as previously mentioned. In other implementations, the tuning & impedance matching network or parts thereof are included in the GA power converter 212. Further, the GA controller 214 interfaces to the GA power converter 212 and the GA wireless communication unit 216 for data exchange and system control. It also provides a data interface 219 (e.g., Ethernet) to communicate with a system external entity e.g., via a backbone network as mentioned with reference to FIG. 1. Moreover, the GA power converter 212 disposes a power interface 218 for feeding or receiving AC or DC power as discussed with reference to FIG. 1.

At the second level, FIG. 2 shows the VA 206 composed of a WPT vehicle unit 230 (e.g., 106a of FIG. 1) connected to a VA power conversion & control unit 240. At a third level, the VA power conversion & control unit 240 comprises a VA power converter 242 (e.g., 108a of FIG. 1), a VA controller 244, and a VA wireless communication unit 246. The vehicle unit 230 comprises a VA WPT coil 232 and a VA PD unit 238, the vehicle-side counterpart of the GA PD unit 228 interfacing with the VA controller for data exchange and control. Splitting the VA into two blocks implies implementations where the VA power conversion & control unit and the vehicle unit are physically separated (as illustrated in FIG. 1) and interconnected via a multiwire cable herein referred to as VA feeder cable (not shown). However, this should not exclude implementations where the VA power conversion & control unit 240 is entirely or partially integrated in the vehicle unit 230 forming one physical unit with a common housing (not shown).

In a standard-conforming implementation, the VA wireless communication unit 246 is a WiFi Client. As with the GA wireless communication unit, the VA wireless communication unit may be external to the VA 206, e.g., mounted anywhere on the vehicle or parts or it may be partially or fully integrated into the vehicle unit.

In some implementations, the VA WPT coil 232 includes a tuning & impedance matching network (not shown) forming a resonant circuit and the vehicle unit is referred to as the VAR as previously mentioned. Further, the VA controller interfaces to the VA power converter and the VA wireless communication unit for data exchange and control. It also provides a line communication interface 249, e.g., a CAN bus interface to communicate with an external vehicle onboard entity. Moreover, the VA power converter disposes a power interface 248 for feeding or receiving DC power as previously discussed with reference to FIG. 1.

This disclosure may refer to signals such as the combined signal, WPT signal and DIPS signal. It should be appreciated that the DIPS signal may also be referred to as a positioning signal, and may be a signal that is used in connection with another positioning technique instead of or in addition to DIPS (e.g., ultra-wide-band). While embodiments described herein may refer specifically to extracting the DIPS signal from the combined signal, it should be understood that other embodiments may also or alternatively include extracting a different positioning signal from the combined signal (e.g., an ultra-wide-band positioning signal). The descriptions provided herein are for example only, and the same techniques, methods, and processes may be used for other positioning signals, regardless of the particular label that is used.

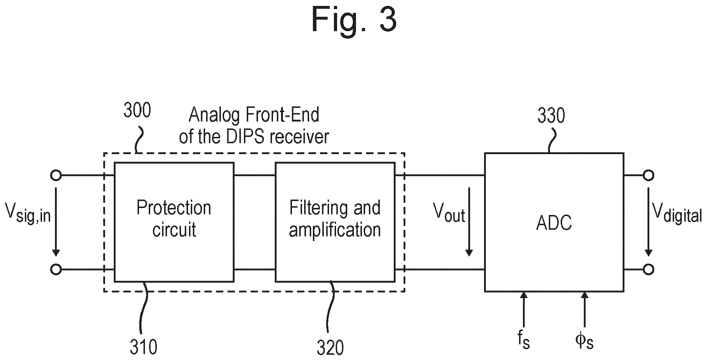

FIG. 3 illustrates an example analog front-end circuit 300, comprising a protection circuit 310 and a filtering and amplification circuit 320. The analog front-end circuit 300 may be configured to limit the amplitude of the input signal to a maximum of +/- 2.5V, in some examples. This may address the fact that the induced voltage from the WPT coils can be relatively large compared to the DIPS voltage, such as up to 35V or more as compared to 0.1V (e.g., 100mV) for the DIPS voltage. The DIPS signals that are used for positioning may be a maximum of approximately 100mV (e.g., 70mV in some cases). Due to the difference in magnitude of the WPT signal and the DIPS signal, it may be difficult or impossible to operate without reducing the input voltage, given the capabilities and/or inability of current circuit and component designs to operate over such a large range. Since the DIPS receiver may be operated over a distance of approximately 0-5 meters from the corresponding positioning assembly, in practice this may translate into a voltage range of 1µV to 100mV for the DIPS signal that is used for positioning. The output of the analog front-end circuit 300 passed to an analog to digital converter (ADC) 330.

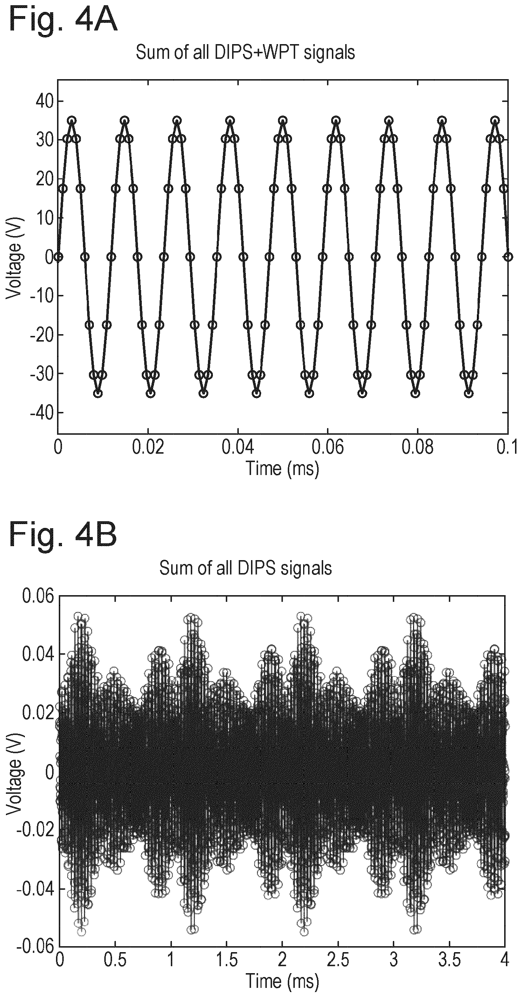

FIGS. 4A-B illustrate an example idealized signal for a combined WPT and DIPS signal (FIG. 4A), and for only the DIPS signal (FIG. 4B), in accordance with some examples of the disclosure. In the illustrated embodiment, the combined signal shown in FIG. 4A has an amplitude of approximately +/-35V. The positioning signal extracted therefrom, in an idealized scenario, may have an amplitude of approximately +/-50mV. This is a difference in amplitude of greater than 10x.

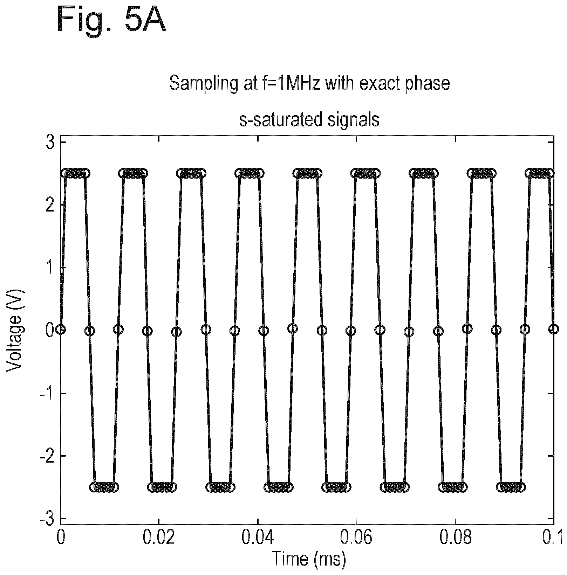

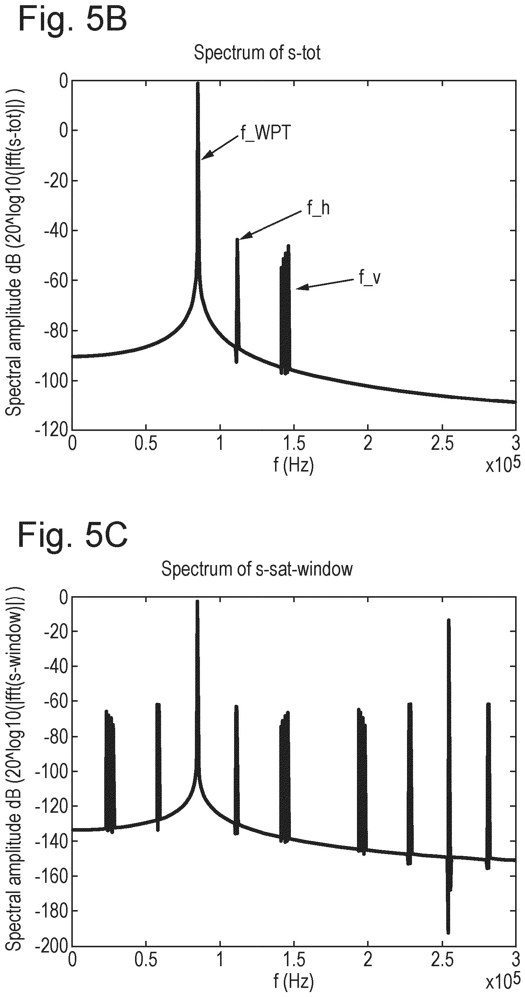

FIGS. 5A-C illustrate a saturated signal output by the analog front-end 300 of FIG. 3, for a combined WPT and DIPS signal (FIG. 5A), an expected frequency spectrum of the combined signal of FIG. 5A if there was no saturation (FIG. 5B), and the actual frequency spectrum of the combined signal of FIG. 5A due to saturation (FIG. 5C), in accordance with some examples of the disclosure.

When the combined input signal shown in FIG. 4A (e.g., the WPT signal combined with the DIPS positioning signal) is provided to the analog front-end 300, the signal is clipped at +/- 2.5V by the protection circuit 310. This saturated signal is shown in FIG. 5A. To extract the positioning signal from the saturated signal, certain assumptions about the expected frequency of the positioning signal components may be made. Table 1 below illustrates the expected frequencies of the components of the DIPS signal f_v1, f_v2, f_v3, f_v4, and f_h1, as well as the expected frequency of the WPT signal f_WPT. The expected frequencies for the positioning signals and WPT signal are established in the relevant SAE standard covering wireless power transfer for vehicles, SAE J2954. Based on the assumptions of the frequencies at which to expect the components of the DIPS signal, it is possible to construct a total signal comprising the DIPS signals and the WPT signal (s_tot). This combined signal is shown in FIG. 4A. FIG. 4B illustrates only the DIPS signals.. Hence, by clipping the (s_tot) to +/-2.5V we obtain a saturated signal, as shown in FIG. 5A. FIG. 5B then illustrates the ideal spectrum of the signal s_tot if it were not saturated. FIG. 5C illustrates the spectrum of the saturated signal of FIG. 5A.

**Table 1**

| Amplitude [mV] | Frequency [kHz] | Signal |
|---|---|---|
| A_DIPS_v1=5 | f_v1=142 | s_DIPS_1=A_DIPS_v1*sin(2*pi*f_v1*t+Φ₁) |
| A_DIPS_v2=8 | f_v2=143 | s_DIPS_2= A_DIPS_v2*sin(2*pi*f_v2*t+Φ₂) |
| A_DIPS_v3=10 | f_v3=145 | s_DIPS_3= A_DIPS_v3*sin(2*pi*f_v3*t+Φ₃) |
| A_DIPS_v4=13 | f_v4=146 | s_DIPS_4= A_DIPS_v4*sin(2*pi*f_v4*t+Φ₄) |
| A_DIPS_h1=20 | f_h1=111.50 | s_DIPS_5= A_DIPS_h1*sin(2*pi*f_h1*t+Φ₅) |
| A_WPT=35V | f_WPT=85 | s_WPT=A_WPT*sin(2*pi*f WPT*t+phi) |
| | | s_tot=s_WPT+s_DIPS_1+s_DIPS_2+s_DIPS_3+s_DIPS_4+s_DIPS_5 |

As can be seen in FIG. 5B, if the combined signal is not saturated, it is possible to extract the DIPS signal frequencies and amplitudes without any aliasing issue. However, due to the saturation of the combined signal, and the fact that the combined signal is clipped at +/-2.5V, the possible frequency components of the WPT signal and DIPS signal result in multiple possible frequencies and amplitudes (e.g., aliased frequencies).

To extract the correct DIPS component frequencies and amplitudes, the correct sampling frequency and sampling phase must be determined. Because the combined signal saturation happens only at +/-2.5 V, there is a time period during each cycle of the combined signal for which, in this example, the combined signal amplitude is between -2.5V and +2.5V, meaning that the DIPS signal may be reliably extracted during this window.

During the time period for which the combined signal is between -2.5V to +2.5V, the signal is not saturated. If the combined signal is sampled at the zero crossings of the WPT signal (e.g., at a sampling rate equal to the WPT frequency) the ADC 330 will not see a strong WPT signal, and will only see the DIPS signals in their respective mV range. By selecting the correct sampling frequency for the ADC 330 to sample the combined signal, the WPT signal can effectively be removed, and the ADC 330 is left only with the DIPS signal.

In some examples, the sampling frequency of the ADC 330 is set to the frequency of the WPT signal. The WPT signal frequency may be 85-90kHz. In some examples, the frequency of the WPT can be extracted from the FFT, as shown in FIG. 5C. The largest amplitude frequency component may correspond to the frequency of the WPT signal component of the combined signal.

However, even if the WPT component frequency is known, the system may also determine the appropriate sampling phase for use by the ADC 330. Ideally, the sampling phase used by the ADC 330 is the same phase as the WPT component of the combined signal, so that the WPT signal can be removed from the combined signal. However, if the sampling phase is off slightly from the WPT component phase, it can result in an offset to the measurement of the DIPS components of the combined signal.

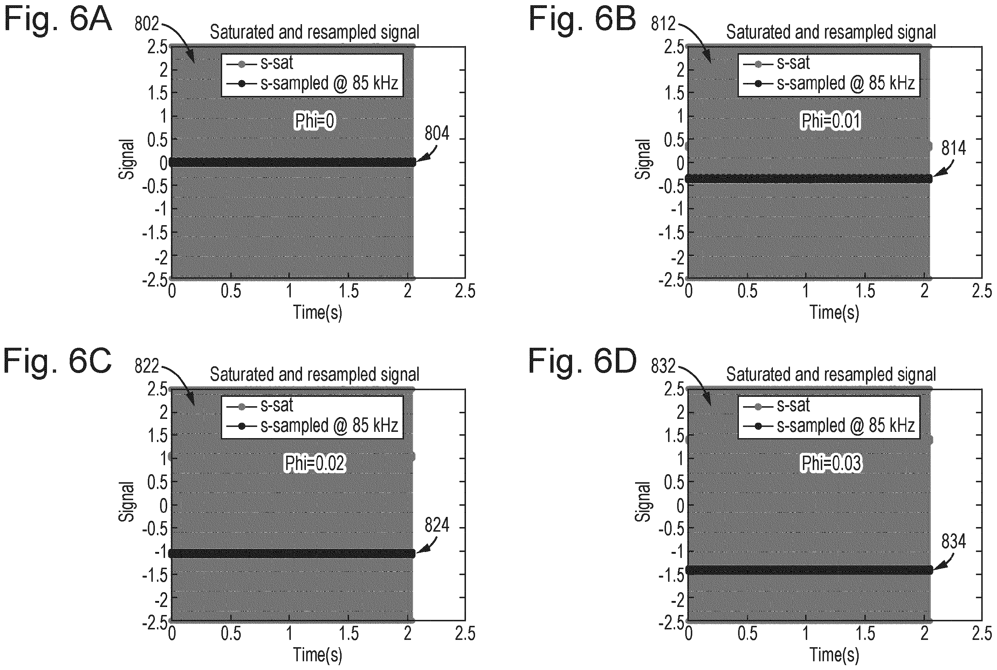

FIGS. 6A-D illustrate example charts of the saturated combined signal, as well as the extracted or sampled DIPS signal using four different phase offsets from the WPT signal phase, in accordance with some examples of the disclosure. FIG. 6A illustrates the saturated signal 802 over time, as well as the extracted DIPS signal 804, for a sampling phase offset of phi=0 radians difference from the phase of the WPT signal. FIG. 6B illustrates the saturated signal 812 over time, as well as the extracted DIPS signal 814, for a sampling phase offset of phi=0.01 radians difference from the phase of the WPT signal. FIG. 6C illustrates the saturated signal 822 over time, as well as the extracted DIPS signal 824, for a sampling phase offset of phi=0.02 radians difference from the phase of the WPT signal. And FIG. 6D illustrates the saturated signal 832 over time, as well as the extracted DIPS signal 834, for a sampling phase offset of phi=0.03 radians difference from the phase of the WPT signal. As can be seen in FIGS. 6A-D, when the sampling phase is slightly offset from the phase of the WPT component of the combined signal, the extracted DIPS signal has a corresponding amplitude offset shown as a vertical voltage offset in the sampled signal. A positive phase offset may result in a negative amplitude offset in the sampled DIPS signal, and a negative phase offset may result in a positive amplitude offset in the sampled DIPS signal. However, the opposite relationship may also occur in some embodiments.

The sampling phase may be determined by extracting the DIPS signal using a first sampling phase, and then iteratively modifying the sampling phase until the measured amplitude offset of the sampled DIPS signal is zero.

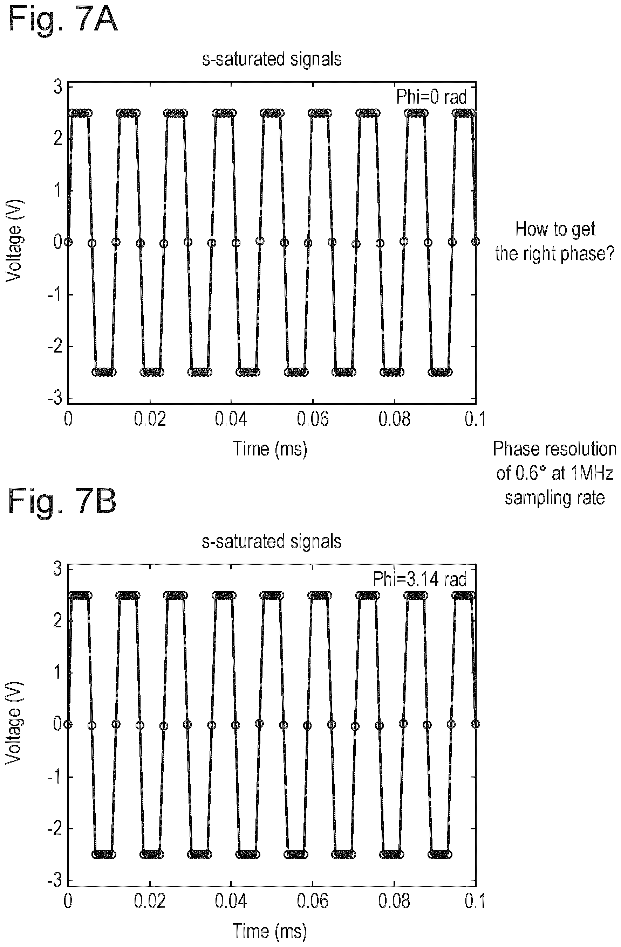

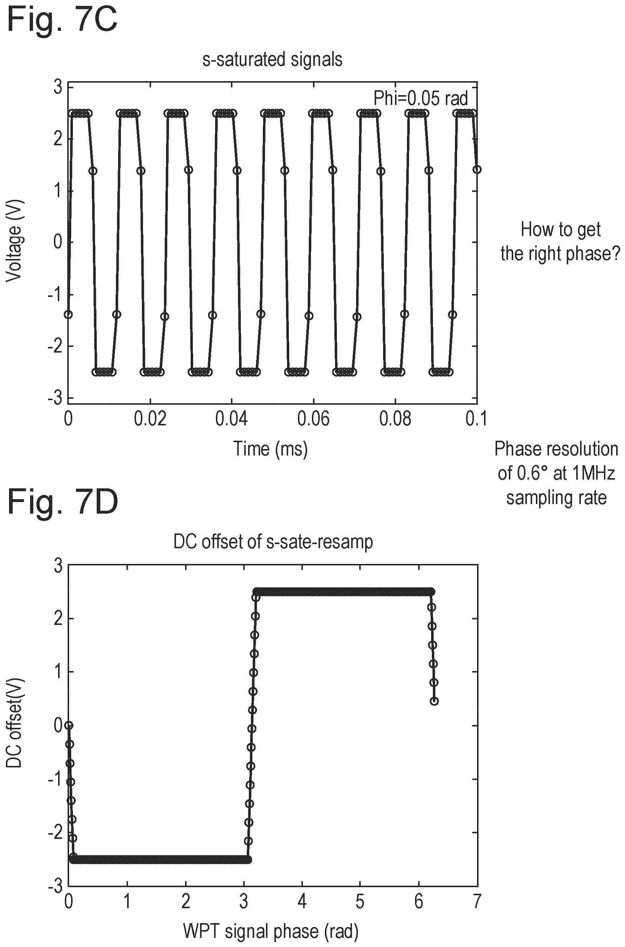

FIGS. 7A-D illustrate the saturated combined WPT and DIPS signal sampled at three different phases (FIGS. 7A-C), as well as the extracted offset of the sampled DIPS signal for various phase shifts (FIG. 7D), in accordance with some examples of the disclosure. FIG. 7A illustrates the combined signal sampled at a phase that matches the WPT signal phase (e.g., a phase offset of zero). FIG. 7B illustrates the combined signal sampled at a phase that is offset by 0.05 radians from the WPT signal phase (e.g., a phase offset of 0.05 radians). And FIG. 7C illustrates the combined signal sampled at a phase that is offset by 3.14 radians (e.g., pi radians) from the WPT signal phase (e.g., a phase offset of pi radians). FIG. 7D illustrates the amplitude offset of the extracted DIPS signal, based on the phase difference between the sampling phase and the WPT phase. As can be seen in FIG. 7D, for small differences in phase between the sampling phase and the WPT phase, e.g., around zero, pi, and 2pi, the voltage offset for the extracted DIPS signal is less than +/- 2.5V. The phase can therefor be accounted for in post processing, and/or by reconfiguring the sampling phase used by the ADC 330.

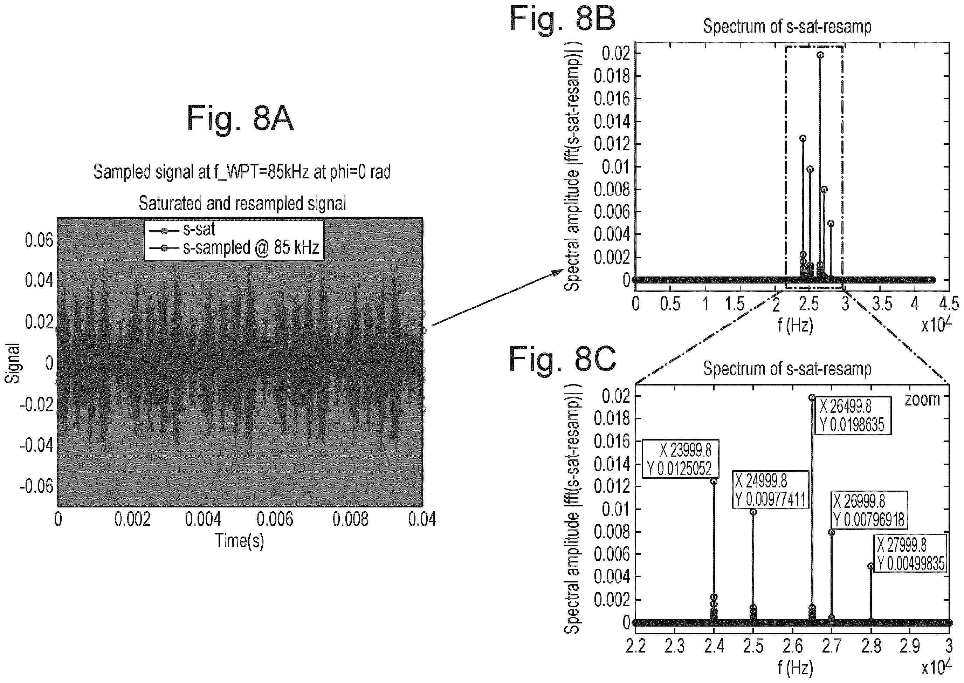

FIGS. 8A-C illustrate the saturated combined WPT and DIPS signal, as well as the sampled DIPS signal at a correct sampling frequency and phase (FIG. 8A), as well as the frequency spectrum of the sampled DIPS signal (FIGS. 8B-C), in accordance with some examples of the disclosure.

The WPT system may compute a spectrum of the sampled signal, shown in FIG. 8B. FIG. 8C illustrates a zoomed in version of the spectrum shown in FIG. 8B. This enables the system to identify spectral components of the extracted DIPS signal. Since the saturated signal is resampled using the WPT frequency (e.g., 85kHz), the DIPS signal components will be aliased. That is, although the DIPS signal component frequencies should be expected at frequencies of 142, 143, 145, and 146 kHz for vertical positioning, and 111.5, 113.5, 115.5, and 117.5 kHz for horizontal position, by sampling the combined signal at 85kHz (e.g., the WPT signal frequency), there is ambiguity introduced.

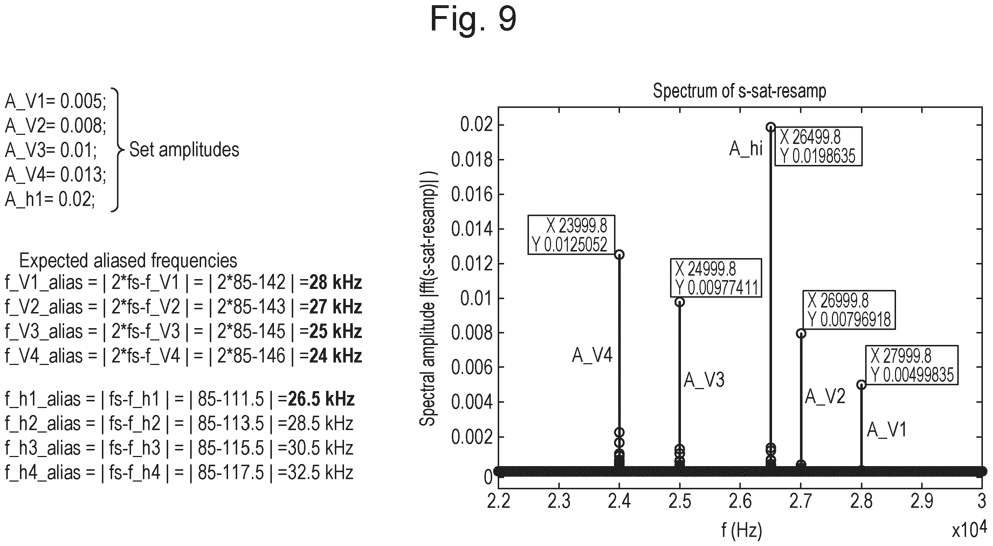

FIG. 9 illustrates an example computation that the WPT system may perform in order to determine the expected frequencies of the extracted DIPS signal components and their relationship to the original DIPS signal, given the aliasing that occurs based on the sampling frequency matching the WPT signal frequency. As can be seen in FIG. 9, for a sampling frequency of 85kHz (e.g., the WPT signal frequency), the expected DIPS frequencies are 28, 27, 25, 24, 26.5, 28.5, 30.5, and 32.5kHz for the vertical and horizontal components respectively. This computation enables the system to accurately reconstruct the corresponding amplitudes, and thereby determine the correct positioning based on these measurements.

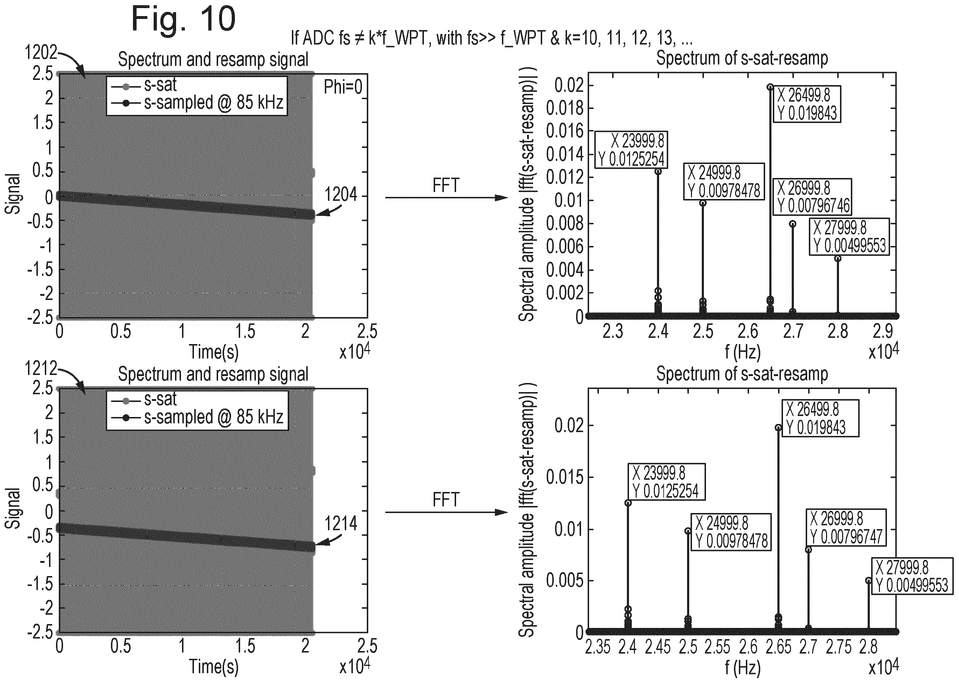

FIG. 10 illustrates two examples of a saturated combined WPT and DIPS signal (e.g., signals 1202 and 1212 respectively) and corresponding DIPS signals (e.g., signals 1204 and 1214 respectively) sampled using the same sampling frequency offset, but using two different sampling phase offsets. The top of FIG. 10 illustrates the extracted DIPS signal 1204 when the sampling frequency of the ADC 330 is slightly offset from the WPT frequency. That is, if the WPT frequency is 85kHz, and the sampling frequency used by the ADC 330 does not quite match 85kHz, the result is a slight slope in the measured DIPS signal (e.g., as shown in the top of FIG. 10). Additionally, if the ADC 330 uses a slightly offset sampling frequency, and a slightly offset sampling phase, the resulting DIPS signal has both a slight slope, and a vertical offset in the measured signal (e.g., as shown in the bottom of FIG. 10).

However, even if there is an offset in the sampling frequency and/or sampling phase with respect to the WPT component frequency and/or phase, FIG. 10 illustrates that the DIPS component frequencies and amplitudes can still be extracted from the signal. As a result, the positioning can still be carried out, even with slight offsets to the sampling frequency and/or sampling phase. In some examples, measuring the DIPS signal slope and vertical offset enables the system to correct for the sampling frequency and/or sampling phase offset in post processing, and/or to reconfigure the ADC 330 with the correct sampling frequency and/or sampling phase.

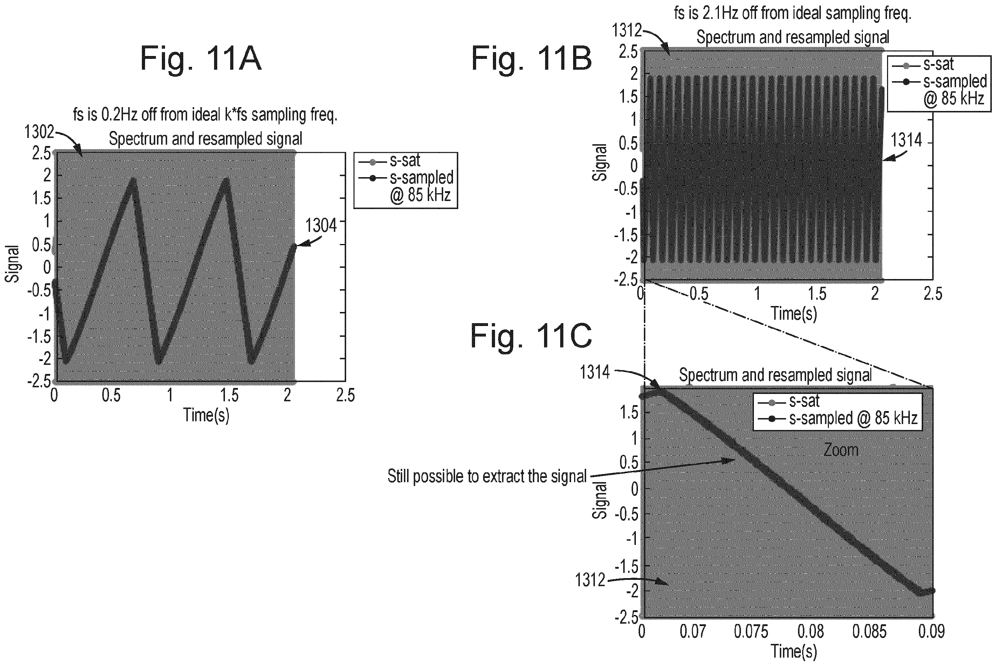

FIGS. 11A-C illustrate examples of a saturated combined WPT and DIPS signal (e.g., 1302, 1312) and corresponding DIPS signal (e.g., 1304, 1314) sampled at two different sampling frequencies, in accordance with some examples of the disclosure. FIG. 11A illustrates the extracted DIPS signal 1304 using a sampling frequency that is offset from the WPT signal frequency by 0.2Hz. FIG. 11B illustrates the extracted DIPS signal 1314 using a sampling frequency that is offset from the WPT signal frequency by 2.1Hz. FIG. 11C illustrates a zoomed in version of a portion of FIG. 11B, wherein it can be seen that the slope of the DIPS signal 1314 can still be corrected, and the correct DIPS signal component frequencies and amplitudes can still be determined, thereby enabling the system to perform positioning determinations even when the sampling frequency is significantly offset from the WPT signal frequency.

It should be appreciated that the techniques described herein may be used in various contexts for localization or positioning within a wireless power transfer system. In one example, the system may continuously use the system described herein during wireless power transfer. In another example, the system may be switched on for short periods of time either a single time, or at a regular interval (e.g., 10 seconds off, 0.5 seconds on). In another example, one or more of the DIPS coils may be switched on at a time. That is, first a single DIPS coil is switched on to provide a measurement, then switched off while a second coil is switched on, and so on until each DIPS coil is switched on in turn while the other coils are turned off. In another example, one or more DIPS coils may be switched on in a given order, such as a first coil turned on, then a second is turned on while leaving the first one turned on, then a third is turned on while leaving the first and second turned on, etc. Various other combinations are possible as well.

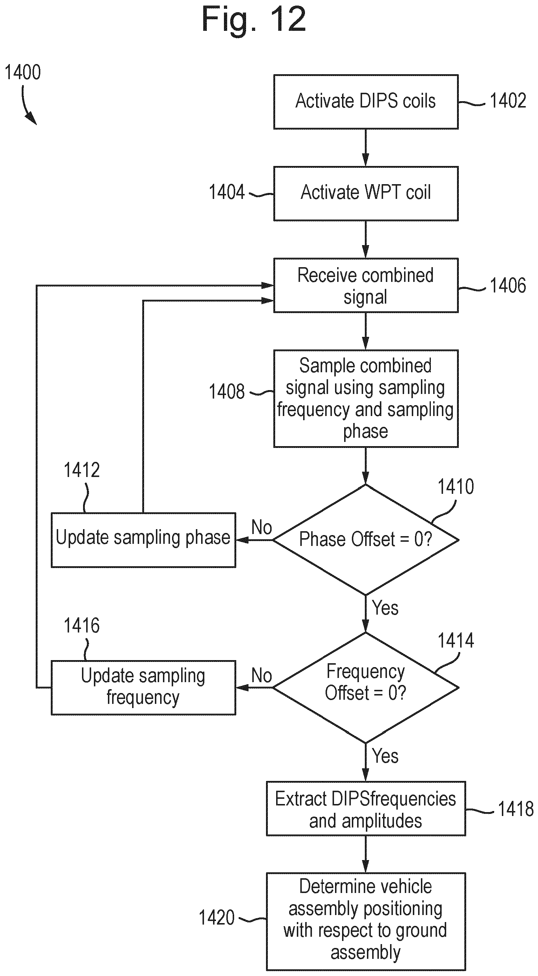

FIG. 12 illustrates a flowchart of an example process 1400 for determining the position of a vehicle assembly with respect to a ground assembly using the sampling techniques disclosed herein, in accordance with some examples of the disclosure. The process 1400 may be carried out by the systems and devices described herein, and may be implemented, in whole or in part, by the devices and systems shown in FIGS. 1-11. One or more actions of the process 1400 may be incorporated into or combined with one or more actions of any other process or embodiments described herein. The process 1400 may be saved to a memory or storage as one or more instructions or routines that may be executed by a corresponding device or system to implement the process 1400.

At step 1402, the process 1400 includes activating the DIPS coils. This enables the VA to arrive at the GA and use the DIPS coils for initial positioning of the vehicle. At step 1404, the process 1400 includes activating the WPT coil. This enables the power to be transferred between the VA and GA.

At step 1406, the process 1400 includes receiving the combined signal. As noted above, when both the WPT coil and the positioning coils are active, the combined signal is received. At step 1408, the process 1400 includes sampling the combined signal using a sampling frequency and a sampling phase. The initial sampling frequency and sampling phase used may be a default frequency (e.g., 85kHz) and phase.

At steps 1410 and 1414, the process 1400 includes determining whether the phase offset is 0 and frequency offset is 0. As discussed above with respect to FIGS. 6-11, the sampled DIPS signal may have a vertical offset corresponding to the phase offset, and a slope corresponding to the frequency offset. Steps 1412 and 1416 may include updating the sampling phase and sampling frequency used by the ADC (e.g., ADC 330) to extract the DIPS signal. Steps 1406-1416 may be repeated iteratively until the phase offset and frequency offset are zero.

At step 1418, the process 1400 may include extracting the DIPS frequencies and amplitudes from the signal. This may include identifying the aliased frequencies, and/or performing one or more calculations with respect to the sampled signal. At step 1420, the process 1400 includes determining the vehicle assembly positioning with respect to the ground assembly. This may be performed based on the extracted DIPS frequencies and amplitudes.

The systems, devices, and processes discussed above are intended to be illustrative and not limiting. One skilled in the art would appreciate that the actions of the processes discussed herein may be omitted, modified, combined, and/or rearranged, and any additional actions may be performed without departing from the scope of the invention. Furthermore, it should be noted that the features and limitations described in any one example may be applied to any other example herein, and flowcharts or examples relating to one example may be combined with any other example in a suitable manner, done in different orders, or done in parallel. In addition, the systems and methods described herein may be performed in real-time. It should also be noted that the systems and/or methods described above may be applied to, or used in accordance with, other systems and/or methods.

All of the features disclosed in this specification (including any accompanying claims, abstract, and drawings), and/or all the steps of any method or process so disclosed, may be combined in any combination, except combinations where at least some of such features and/or steps are mutually exclusive.

Each feature disclosed in this specification (including any accompanying claims, abstract, and drawings), may be replaced by alternative features serving the same, equivalent, or similar purpose unless expressly stated otherwise. Thus, unless expressly stated otherwise, each feature disclosed is one example only of a generic series of equivalent or similar features.

Throughout the description and claims of this specification, the words "comprise" and "contain" and variations of them mean "including but not limited to", and they are not intended to (and do not) exclude other moieties, additives, components, integers, or steps. Throughout the description and claims of this specification, the singular encompasses the plural unless the context otherwise requires. In particular, where the indefinite article is used, the specification is to be understood as contemplating plurality as well as singularity, unless the context requires otherwise.

The reader's attention is directed to all papers and documents which are filed concurrently with or previous to this specification in connection with this application and which are open to public inspection with this specification, and the contents of all such papers and documents are incorporated herein by reference.

## Claims

1. A method for localizing a vehicle assembly with respect to a ground assembly in a wireless power transfer system, the method comprising:
receiving a combined signal comprising (a) a wireless power transfer (WPT) signal and (b) a differential inductive positioning system (DIPS) signal;
determining a sampling frequency for the combined signal;
determining a sampling phase for the combined signal;
extracting the DIPS signal from the combined signal based on the sampling frequency and the sampling phase; and
determining the vehicle assembly position relative to the ground assembly based on the extracted DIPS signal.

2. The method of claim 1, wherein the combined signal comprising the WPT signal and the DIPS signal has an amplitude which is larger than or equal to a saturation voltage of a vehicle assembly receiver of the vehicle assembly.

3. The method of claim 1 or 2, wherein determining the sampling frequency comprises setting the sampling frequency to the WPT signal frequency.

4. The method of claim 3, wherein the WPT signal frequency is in the range of 85kHz to 90kHz.

5. The method of any of the preceding claims, wherein extracting the DIPS signal comprises passing the combined signal through an analog front end which comprises (a) a protection circuit to limit the amplitude of the combined signal, and (b) a filtering and amplification circuit.

6. The method of claim 5, further comprising:
passing a signal output from the analog front end through an analog-to-digital converter, wherein the analog-to-digital converter has an adjustable sampling frequency and an adjustable phase, wherein the adjustable sampling frequency is set to the determined sampling frequency for the combined signal, and the adjustable phase is set to the determined sampling phase for the combined signal.

7. The method of any of the preceding claims, wherein determining the sampling phase comprises:
detecting a first DIPS signal from the combined signal using a first candidate sampling phase;
determining an amplitude offset for the detected first DIPS signal;
determining a modified candidate sampling phase based on the amplitude offset, such that the modified candidate sampling phase results in a detected second DIPS signal having a zero amplitude offset; and
setting the sampling phase to be the modified candidate sampling phase.

8. The method of any of the preceding claims, wherein extracting the DIPS signal further comprises:
applying a fast Fourier transform (FFT) to the extracted DIPS signal to identify frequency components of extracted DIPS signal; and
applying anti-aliasing to the identified frequency components of the extracted DIPS signal based on expected DIPS frequency components.

9. The method of any of the preceding claims, wherein determining the vehicle assembly position relative to the ground assembly is based on respective amplitudes of the frequency components of the extracted DIPS signal.

10. A system for localization within a wireless power transfer system, the system comprising:
a ground assembly configured to transmit a combined signal comprising (a) a wireless power transfer (WPT) signal and (b) a differential inductive positioning system (DIPS) signal; and
a vehicle assembly configured to:
receive the combined signal from the ground assembly;
determine a sampling frequency for the combined signal;
determine a sampling phase for the combined signal;
extract the DIPS signal from the combined signal based on the sampling frequency and the sampling phase; and
determine the vehicle assembly position relative to the ground assembly based on the extracted DIPS signal.

11. A system for localization within a wireless power transfer system, the system comprising:
a vehicle assembly configured to transmit a combined signal comprising (a) a wireless power transfer (WPT) signal and (b) a differential inductive positioning system (DIPS) signal; and
a ground assembly configured to:
receive the combined signal from the ground assembly;
determine a sampling frequency for the combined signal;
determine a sampling phase for the combined signal;
extract the DIPS signal from the combined signal based on the sampling frequency and the sampling phase; and
determine the vehicle assembly position relative to the ground assembly based on the extracted DIPS signal.

12. A vehicle assembly for a wireless power transfer system, the vehicle assembly comprising:
control circuitry configured to:
receive, from a ground assembly, a combined signal comprising (a) a wireless power transfer (WPT) signal and (b) a differential inductive positioning system (DIPS) signal;
determine a sampling frequency for the combined signal;
determine a sampling phase for the combined signal;
extract the DIPS signal from the combined signal based on the sampling frequency and the sampling phase; and
determine the vehicle assembly position relative to the ground assembly based on the extracted DIPS signal.

13. A ground assembly for a wireless power transfer system, the ground assembly comprising:
control circuitry configured to:
receive, from a vehicle assembly, a combined signal comprising (a) a wireless power transfer (WPT) signal and (b) a differential inductive positioning system (DIPS) signal;
determine a sampling frequency for the combined signal;
determine a sampling phase for the combined signal;
extract the DIPS signal from the combined signal based on the sampling frequency and the sampling phase; and
determine the vehicle assembly position relative to the ground assembly based on the extracted DIPS signal.
